# EUROPEAN PATENT SPECIFICATION

(11) **EP 0 632 103 B1**
(45) Date of publication and mention of the grant of the patent: **03.03.1999**
(21) Application number: 94109384.1
(22) Date of filing: 17.06.1994
(51) Int. Cl.: C09B 29/30, C09B 29/045

(54) **Azo dyestuffs**
Azofarbstoffe
Colorants azoiques

(30) Priority: 30.06.1993 US 85233
(43) Date of publication of application: 04.01.1995
(73) Proprietor: Bayer Corporation, Pittsburgh, PA 15205-9741 (US)
(72) Inventor: Good, James J., Charleston, SC 29414 (US); Cone, Ellen, North Charleston, SC 29418 (US)
(74) Representative: Zobel, Manfred, Dr.

(56) References cited:
- EP-A- 0 183 151
- FR-A- 2 536 082

## Description

### BACKGROUND OF THE INVENTION

This invention relates to novel azo compounds useful as dyestuffs and to their preparation and use. The compounds of the invention are particularly useful for dyeing paper and other cellulosics.

Dyestuffs based on aminonaphtholsulfonic acids, such as "J acid", are known. E.g., H.M. Parmelee, "Naphthalene Intermediates" in The Chemistry of Synthetic Dyes and Pigments, American Chemical Society Monograph Series, edited by H.A. Lubs (Malabar, Florida: Robert E. Krieger Publishing Company, 1955), pages 88-91. Azo dyestuffs based on dehydrothic-p-toluidinesulfonic acid ("DHTPTSA") are also known. E.g, U.S. Patent 5,173,086. The structural features of both starting materials have not previously been combined in a single azo dyestuff. Azo dyestuffs which contain a phenylbenzothiazole moiety are known from FR-A 2 536 082.

It has now been found that azo compounds prepared from certain aminonaphtholsulfonic acids and DHTPTSA (and derivatives thereof) provide red dyestuffs having excellent coloristic and dyeing properties for cellulosic materials.

### SUMMARY OF THE INVENTION

This invention relates to azo compounds useful as a dyestuff having the formula (I) 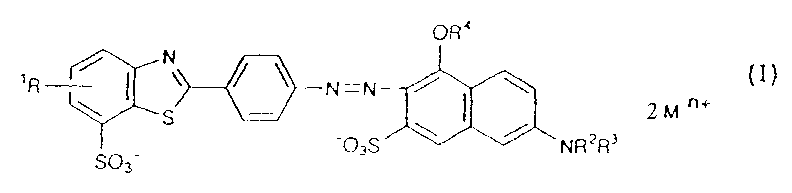 wherein
- R¹: is C₁-C₆ alkyl, C₅-C₈ cycloalkyl, halogen, or nitro;
- R² and R³: are independently hydrogen, C₁-C₆ alkyl, C₅-C₈ cycloalkyl, C₆-C₁₀ aryl, C₇-C₁₆ aralkyl, C₂-C₆ alkanoyl, (C₅-C₈ cycloalkane)carbonyl, or C₇-C₁₁ aroyl;
- R⁴: is hydrogen, C₁-C₆ alkyl, or C₂-C₆ alkanoyl; and
- Mⁿ⁺: is
(a) R^{a}R^{b}R^{c}R^{d}N⁺, wherein R^{a}, R^{b}, R^{c}, and R^{d} are independently hydrogen, C₁-C₆ alkyl, or C₂-C₆ hydroxyalkyl,
(b) 1/n moles of an n-valent metal ion per mole of the azo compound, or
(c) H⁺.

### DETAILED DESCRIPTION OF THE INVENTION

The color properties of the dyestuffs of formula (I) of the invention can be varied somewhat by varying the substituents R¹, R², R³, and R⁴ and, in some cases, the ionic cations Mⁿ⁺. In general, however, the dyestuffs are red.

The term "C₁-C₆ alkyl" refers to straight or branched chain aliphatic hydrocarbon groups having from 1 to 6 carbon atoms. Examples of C₁-C₆ alkyl are methyl, ethyl, propyl, butyl, pentyl, hexyl, and the isomeric forms thereof.

The term "C₂-C₆ hydroxyalkyl" refers to straight or branched chain aliphatic hydrocarbon groups having from 2 to 6 carbon atoms and substituted with a hydroxy group. Examples of C₂-C₆ hydroxyalkyl are hydroxyethyl, hydroxypropyl, hydroxybutyl, hydroxypentyl, hydroxyhexyl, and isomeric forms thereof.

The term "C₅-C₈ cycloalkyl" refers to cycloaliphatic hydrocarbon groups having from 5 to 8 carbon atoms. Examples of C₅-C₈ cycloalkyl are cyclopentyl, cyclohexyl, cycloheptyl, and cyclooctyl.

The term "C₆-C₁₀ aryl" refers to aromatic hydrocarbons, such as phenyl and 1- or 2-naphthyl. As used herein, the term "aryl" also refers to phenyl or naphthyl substituted with alkyl, alkoxy, halogen, cyano, and nitro as defined herein.

The term "C₇-C₁₆ aralkyl" refers to C₁-C₆ alkyl substituted with C₆-C₁₀ aryl such that the total number of carbon atoms is from 7 to 16. Examples of C₇-C₁₆ aralkyl are benzyl, phenethyl, and naphthylmethyl. As used herein, the term "aralkyl" also refers to groups in which the aromatic ring carbon atoms are substituted with alkyl, alkoxy, halogen, cyano, and nitro as defined herein.

The term "C₂-C₆ alkanoyl" refers to straight or branched chain alkanoyl groups having from 2 to 6 carbon atoms. Examples of C₂-C₆ alkanoyl are acetyl, propanoyl, butanoyl, pentanoyl, hexanoyl, and the isomeric forms thereof.

The term "(C₅-C₈ cycloalkane)carbonyl" refers to acyl groups in which the carbonyl functionality is attached to a C₅-C₈ cycloalkyl groups. Examples of (C₅-C₈ cycloalkane)carbonyl include cyclopentanecarbonyl and cyclohexanecarbonyl.

The term "C₇-C₁₁ aroyl" refers to benzoyl and 1- or 2-naphthoyl. As used herein, the term "aroyl" also refers to groups in which the aromatic ring carbon atoms are substituted with alkyl, alkoxy, halogen, cyano, and nitro as defined herein.

Examples of halogen are fluorine, chlorine, bromine, and iodine.

The term "n-valent metal ion" refers to ionized metal species having a positive charge n that are capable of forming water-soluble salts with the anionic moiety. The metal species can be a metal or, less preferably, a metal within a complex. Although certain metal ions are themselves capable of contributing color to the salts, preferred compounds of the invention are prepared using metal ions that contribute little or no color. When metal-containing dyestuffs are desired, the preferred metal ions include alkali metal ions, particularly lithium, sodium, and potassium.

The process used to prepare the dyestuffs of the present invention is carried out by coupling a diazonium salt of formula (II) with a 6-amino-1-naphthol-3-sulfonic acid of formula (III), as illustrated in Scheme A. 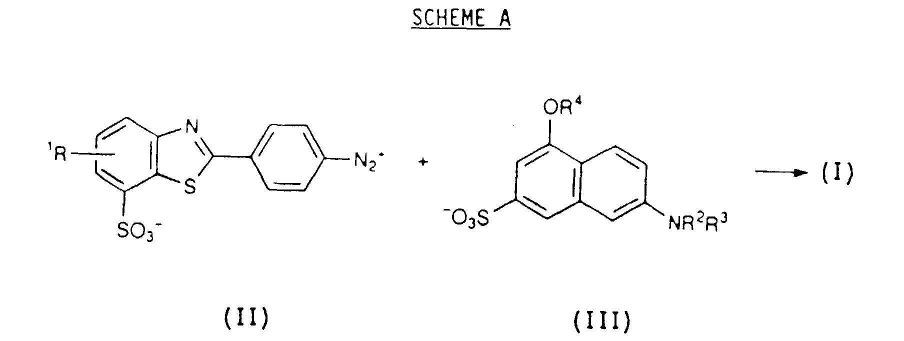 wherein R¹, R², R³, and R⁴ are defined as above.

The diazonium salt of formula (II) can be prepared using known diazotization methods from the corresponding amino compound of formula (IV) 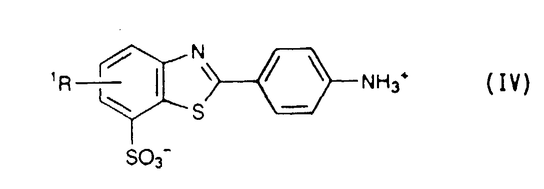 wherein R¹ is as defined above. (Although amino compounds of formula (IV) are represented above as a zwitterion, this representation is not intended to exclude species having a different form.) In a particularly useful diazotization method, the amino compound (IV) is diazotized in water containing a nitrite salt (preferably an alkali metal nitrite such as sodium nitrite) and a mineral acid (preferably hydrochloric acid). Diazotizations according to this preferred method are typically carried out at temperatures of less than about 60°C (preferably about 40°C to 60°C), although it is possible but less preferred to use temperatures somewhat outside this range.

The resultant diazonium salt of formula (II) is then coupled in aqueous medium with 6-amino-1-naphthol-3-sulfonic acid ("J acid") or a corresponding O- and/or N-substituted derivative of formula (III) in the presence of a suitable base. Suitable bases are those which provide a basic environment but which do not otherwise react with the reactive species of the coupling reaction. Suitable bases include amines (such as R^{a}R^{b}R^{c}N, wherein R^{a}, R^{b}, and R^{c} are defined as above), quaternary ammonium hydroxides (such as R^{a}R^{b}R^{c}R^{d}N⁺ OH⁻, wherein R^{a}, R^{b}, R^{c}, and R^{d} are defined as above), or inorganic bases (such as M(OH)ₙ, wherein M represents an n-valent metal ion as defined above). In general, the preferred bases are tertiary amines in which R^{a}, R^{b}, and R^{c} are groups other than hydrogen. The azo coupling reaction is preferably carried out at temperatures of less than about 30°C (preferably about 15°C to 30°C), although it is also possible but less preferred to use temperatures somewhat outside this range. The resultant solution can be used directly or can be further processed, for example, by concentration or dilution; by exchange of cations Mⁿ⁺; or by derivatization, before being used as a dye.

N-Substituted or N,N-disubstituted dyestuffs of formula (I) (that is, compounds of formula (I) in which at least one of R² or R³ is a group other than hydrogen) can be prepared directly using an appropriate N-substituted or N,N-disubstituted derivative of 6-amino-1-naphthol-3-sulfonic acid in the azo coupling reaction. It is, however, often also possible to prepare N-substituted dyestuffs by first preparing unsubstituted dyestuffs of formula (I) in which R² and R³ are both hydrogen and then forming the N-substituted or N,N-di-substituted derivative or by first preparing N-substituted dyestuffs of formula (I) in which only one of R² or R³ is hydrogen and then forming the N,N-disubstituted derivative, for example, by using N-alkylating, N-arylating, or N-acylating reactions known in the art.

O-Substituted dyestuffs of formula (I) (that is, compounds of formula (I) in which R⁴ is a group other than hydrogen) can be prepared directly using an appropriate O-substituted derivative of 6-amino-1-naphthol-3-sulfonic acid in the azo coupling reaction. It is, however, often also possible to prepare O-substituted dyestuffs by first preparing unsubstituted dyestuffs of formula (I) in which R⁴ is hydrogen and then forming the O-substituted derivative, for example, by using O-alkylating or O-acylating reactions known in the art.

The cationic group Mⁿ⁺ can be varied by using any of various methods known in the art. For example, as discussed above, an amine or other base can be added during the coupling reaction to give the appropriate cation Mⁿ⁺ directly. The initially present cationic group can also be exchanged after the coupling reaction is carried out, for example, by adding an appropriate base (optionally after neutralizing the initially formed salt with acid). Suitable bases include amines (such as R^{a}R^{b}R^{c}N, wherein R^{a}, R^{b}, and R^{c} are defined as above), quaternary ammonium hydroxides (such as R^{a}R^{b}R^{c}R^{d}N⁺ OH⁻, wherein R^{a}, R^{b}, R^{c}, and R^{d} are defined as above), or inorganic bases (such as M(OH)ₙ, wherein M is an n-valent metal ion as defined above). Although generally not preferred, it is also possible to prepare some salts by ion exchange. Some of the salts can be further concentrated to obtain solids.

In general, the preferred azo compounds according to the invention are those in which R¹ is C₁-C₆ alkyl (preferably methyl, especially methyl substituted at the 6-position of the benzothiazole); R² is hydrogen; R³ is hydrogen or C₆-C₁₀ aryl (preferably phenyl); R⁴ is hydrogen; and Mⁿ⁺ is R^{a}R^{b}R^{c}R^{d}N⁺ in which R^{a}, R^{b}, R^{c}, and R^{d} are independently hydrogen, C₁-C₆ alkyl, or C₂-C₆ hydroxyalkyl (preferably protonated tertiary amines R^{a}R^{b}R^{c}R^{d}N⁺ in which only one of R^{a}, R^{b}, R^{c}, and R^{d} is hydrogen and the others of R^{a}, R^{b}, R^{c}, and R^{d} are independently C₁-C₆ alkyl or C₂-C₆ hydroxyalkyl, more preferably protonated triethanolamine (i.e., (HOCH₂CH₂)₃NH⁺). Particularly preferred dyestuffs are azo compounds of formula (V) 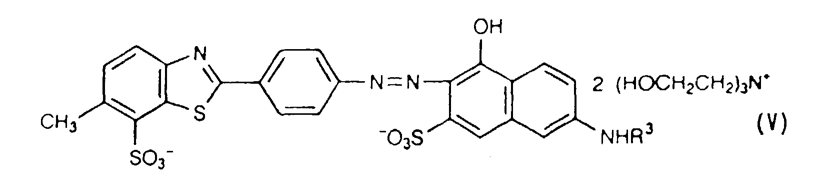 wherein R³ is hydrogen or phenyl.

The dyestuffs of the present invention are preferably applied to a substrate as aqueous solutions or dispersions. Suitable solvents include water and water-miscible organic liquids, such as water-miscible alcohols (for example, methanol and ethanol), amides (such as dimethylformamide), and other such organic liquids known in the art. Suitable solutions or dispersions can, of course, be prepared using solvent mixtures. Aqueous dyestuff solutions containing from about 8 to about 29% by weight of a dyestuff of the invention are particularly preferred.

Mixtures of dyestuffs of the invention with other dyestuffs may also be suitable.

The dyestuffs of the present invention can be used to dye a variety of substrates but are particularly useful for dyeing and printing paper, paperboard, and cardboard, as well as other cellulosics. Particularly suitable substrates include, for example, bleached, sized, or unsized lignin-free paper, for which the starting material can be bleached or unbleached pulp, unbleached or semi-bleached pulps, and recycled and deinked fibers. Other cellulosic fibers, such as cotton, can also be colored by the dyestuffs of the present invention. The dyestuffs can be applied by any of several methods known in the art, including application to a pulp in water suspension, surface dyeing, coating, and printing.

Application to pulp in a water suspension (also called "internal dyeing") can be performed by batch addition to a holding tank or "hydrapulper", which generally provides excellent agitation. Batch addition is performed manually by weighing or volumetrically measuring the dyestuff into the pulp containing vessel. The dyestuffs of the present invention can also be added continuously to a flow of pulp in water by means of a metering device such as a gear or piston type pump.

Surface dyeing can be performed, for example, on a paper machine with a set of rollers known as a "size press." These rolls form a nip with the sheet of paper traveling between them. A pond of size press liquor, which generally contains starch and other additives as well as the dyes, is metered to both sides of the sheet. The liquor is absorbed onto the surface of the sheet, thus imparting a color to the sheet. Surface coloring is often used in combination with internal dyeing techniques.

Coating coloring can be applied by any of several methods on-line to or off-line from a paper machine. Coating slurries typically comprise a pigmented filler (such as clay or titanium dioxide), a latex binder, colorants (such as a dyestuff according to the present invention), and other known additives to enhance the coating performance. The coating mixture is typically applied to the sheet, generally using a roller covered with the coating mixture, and the excess is scraped off with a blade.

Printing can be carried out using any of several known methods to obtain decorative designs or mass surface coverage. The dyestuffs of the present invention, for example, can be mixed with other additives, such as binders and lubricants, and applied to a sheet surface using any of several known printing techniques, such as flexographic printing.

Suitable additives and auxiliaries known in the art can, of course, also be used in conjunction with such application methods. As used herein, the term "additives" refers to substances that aid the dyes of the present invention in bonding to the various substrates. As used herein, the term "auxiliaries" refers to substances that are compatible with the dyes of the present invention and aid in the effective production of various grades of paper. Certain substances, of course, can serve as both additives and auxiliaries. Many additives and auxiliaries are useful in more than one of the above-mentioned application techniques. In practice, however, a narrower group of additives and auxiliaries is typically used for each application method.

For internal dyeing, for example, suitable additives include rosin size, aluminum sulfate, fixing agents (such as amine condensate-type products), retention aids, and inorganic salts (such as sodium chloride). Suitable auxiliaries for internal dyeing include alkenyl succinic anhydride, alkyl ketene dimer, fiber retention aids, wet-strength resins, biocides, and defoamers.

For surface coloring (for example, using a size press), suitable additives include starch and surface active agents (surfactants). Suitable auxiliaries for surface coloring include alkenyl succinic anhydride, and biocides.

For coating coloring, suitable auxiliaries include fillers (such as clay, titanium dioxide, calcium carbonate, and the like), latices, lubricants, gloss enhancers, and defoamers.

For printing, suitable additives include binders, fixing agents, lubricants, humectants, and viscosity controlling agents.

Other suitable additives and auxiliaries would, of course, be known to those skilled in the art.

The following examples further illustrate details for the preparation and use of the compounds of this invention. Those skilled in the art will readily understand that known variations of the conditions and processes of the following preparative procedures can be used to prepare these compounds. Unless otherwise noted, all temperatures are degrees Celsius and all percentages are percentages by weight.

### EXAMPLES

### Example 1

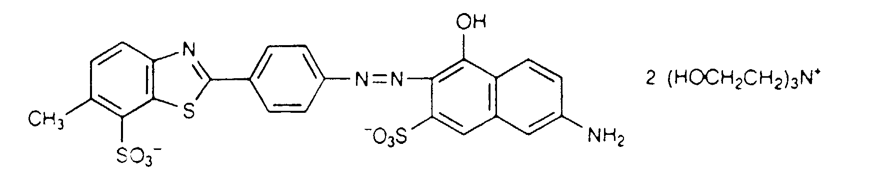

To a solution of 123.6 g of hydrochloric acid (20°Be) diluted with water to a volume of 1380 ml was added 11.2 g of a sodium alkylnaphthalenesulfonate surfactant (an anionic surfactant available as Petro AG Special from DeSoto, Inc.) and 242.4 g of 2-(4-aminophenyl)-6-methyl-7-benzothiazolesulfonic acid (also known as dehydrothio-p-toluidinesulfonic acid or "DHTPTSA"). The mixture was diazotized at 50°C with 52.5 g of sodium nitrite over a period of four hours, after which the reaction was quenched with 0.6 g of sulfamic acid. The resultant precipitate was collected by filtration and washed with water, giving 594.5 g of the diazonium salt of DHTPTSA.

A mixture of 45.4 g 6-amino-1-naphthol-3-sulfonic acid ("J acid") and 84.9 g of triethanolamine in 80 ml of water was stirred until dissolved. One fourth of the diazonium salt of DHTPTSA was then added at ambient temperature over a period of two hours, during which time the solution became orange. Spectroscopic analysis of this solution indicated a λₘₐₓ of 486 nm. This dye yields a yellow shade of red when applied to paper.

### Example 2

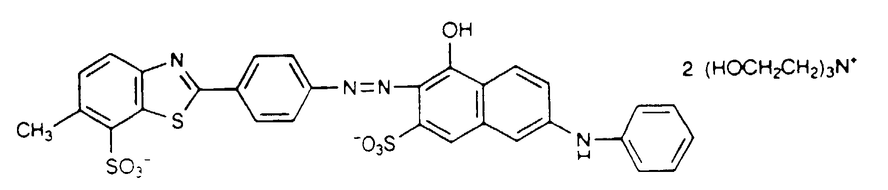

To a solution of 30.9 g of hydrochloric acid (20°Be) diluted with water to a volume of 350 ml was added 2.8 g of a sodium alkylnaphthalenesulfonate surfactant (Petro AG Special) and 60.6 g of DHTPTSA. The mixture was diazotized at 50°C with 14 g of sodium nitrite over a period of four hours, after which the reaction was quenched with 0.4 g of sulfamic acid. The resultant precipitate was collected by filtration and washed with water, giving 143 g of the diazonium salt of DHTPTSA.

A mixture of 59.9 g of 6-phenylamino-1-naphthol-3-sulfonic acid ("phenyl J acid") and 84.9 g of triethanolamine in 80 ml of water was stirred until dissolved. The diazonium salt of DHTPTSA was then added at less than 20°C over a period of two hours. The resultant thick slurry was solubilized by adding an additional 131.7 g of triethanolamine, 624 g of water, and 576 g of urea with warming to 50°C. The resultant solution was stable for six months. Spectroscopic analysis of this solution indicated a λₘₐₓ of 494 nm. This dye yields a blue shade of red when applied to paper.

### Examples 3-6

Performance parameters for the dyes prepared according to Examples 1 and 2 were determined using the following standards (all available from Miles Inc.):
- Standard A:: PONTAMINE Fast Scarlet 4B Liquid (C.I.Direct Red 236)
- Standard B:: PONTAMINE Bordeaux 8B Liquid (C.I. Direct Red 238)
- Standard C:: PONTAMINE Red SER Liquid

Transmission spectra were obtained for known dilutions of each test dye and standard over a range of about 400 to 700 nm. Although the actual molar concentrations of the dyes of Examples 1 and 2 were not determined and their molar extinction coefficients (i.e., absolute absorbances) are thus not known, the relative color strengths of the dyes of Examples 1 and 2 and the standard dyes can be used to compare their color properties. In particular, the relative absorbances at the absorption maximum (λₘₐₓ) of each dye and standard were compared to determine the relative amounts of each dye and corresponding standard that should be applied to the paper samples to obtain dyed samples having similar reflectance strengths.

Sample sheets of dyed kraft paper were prepared as described below using 1% solutions of appropriate dye standards and the indicated amounts of the dye solutions of Examples 1 and 2 (for which the quantities were adjusted as described above to account for the difference in relative light absorbances of the dye solutions). The dyed paper sheets were compared to determine reflectance color strengths (by visual evaluation and instrument measurements), shade (by visual evaluation and from instrument measurements), lightfastness (by visual evaluation), and bleedfastness (by visual evaluation) using the methods described below. In addition, two-sidedness (by visual evaluation) was determined by the method described below.

### Reflectance color strength

a. Visual. The dyed sheets were viewed under a standard light source (MacBeth light booth equipped with a D65 light source). The observed strength of each test dye is reported relative to a standard (listed in each table as parts).
b. Instrument. The dyed sheets were analyzed using a color measuring device (Data Color Systems, ACS model CS-5). The instrument measures the absorbance at λₘₐₓ for each sheet and (using the Kubelka-Munk K/S equation) automatically calculates the difference in color strength between sheets dyed with a test dye and those dyed with a standard. The results are reported in each table as parts.

### Shade

a. Visual. The dyed sheets were examined visually under the same conditions as described above for reflectance color strength. Any difference in shade is reported using standard coloristic difference terms used to describe shade and brightness/dullness. The difference terms are based on the AATCC Gray Scale and are reported as follows:

| Red dyes | |
|---|---|
| Trace yellow | Trace blue |
| Slight yellow | Slight blue |
| Distinct yellow | Distinct blue |
| Considerable yellow | Considerable blue |
| Much yellow | Much blue |
| Off-shade yellow | Off-shade blue |

| Violet dyes | |
|---|---|
| Trace red | Trace blue |
| Slight red | Slight blue |
| Distinct red | Distinct blue |
| Considerable red | Considerable blue |
| Much red | Much blue |
| Off-shade red | Off-shade blue |

Similar descriptive terms are applied to brightness and dullness.
b. Instrument. The color measuring device described above for reflectance color strength provided color readings in the CIELAB measuring system for dyed paper sheets. In the CIELAB system, the term L* refers to lightness, for which a higher value is a lighter color and a lower value is a darker color; the term a* corresponds to redness (positive values) or greenness (negative values); the term b* corresponds to yellowness (positive values) or blueness (negative values); and the term C* refers to chroma, an indication of the color saturation and is calculated as the square root of the sum of the squares of a* and b*. Results are reported in terms of the difference (i.e., delta values) between the corresponding L*, a*, b*, and C* values of sheets dyed with the test dyes and with corresponding values of the standards.

### Bleachability

Bleaching tests were used to determine the amount of color removed from dyed paper using the common bleaching agents sodium hypochlorite, sodium hydrosulfite, or formamidine sulfinic acid ("FAS"). For each test, sample sheets were re-pulped by blending vigorously in water. The pulp was collected on a screen and suspended in a container using sufficient water to form a 4% suspension of pulp. Separate samples were treated at 60°C for 30 minutes with 4.0% sodium hypochlorite at pH 10, with a mixture of 2.0% sodium sulfite and 2.0% sodium hydrosulfite, and 1.0% FAS at pH 10. The bleached pulp samples were then poured into a TAPPI sheet mold, pressed between blotters, and dried at about 93°C on an electric drum-type dryer. The resultant dyed sheets were compared to unbleached paper sheets for color strength. Samples having less color remaining are considered more bleachable. Results are reported in the tables as percent color remaining relative to the unbleached samples.

### Lightfastness

Lightfastness was determined using the general method of AATCC Test Method 16E-1982. Covered strips of dyed paper sheets were placed in a xenon-light fade-ometer and a portion of each strip was exposed to the light source for a period of several hours, during which time the strips were examined periodically. Exposure to light was continued until the exposed portion of the strips exhibited a noticeable fading of color approximating a "Distinct" rating on the AATCC Gray Scale. The exposure time (in hours) needed to produce this degree of fading is reported in the tables.

Lightfastness results are described in terms of "on-shade break" and "off-shade break." An "on-shade break" indicates a faded condition that is the same shade, or hue, as the original unfaded dyeing. An "off-shade break" indicates a faded condition that is a different hue from the original unfaded dyeing.

### Bleedfastness

A piece of dyed paper (25 mm x 25 mm) was placed between white, waterleaf blotter sheets and soaked in the selected bleeding medium (shown in each table). The sandwich of paper and blotter paper was pressed between metal plates under a five pound (2.3 kg) weight for five minutes. The blotters were removed from the strips and dried. Color transfer to the blotters is reported using AATCC Gray Scale difference terminology, with a rating of 1 indicating poor bleedfastness (i.e., a high degree of color transfer) and a rating of 5 indicating a high bleedfastness (i.e., no noticeable color transfer).

### Two-sidedness

Shorter paper fibers and fillers (such as clay or titanium dioxide) tend to concentrate more heavily on one side (top side) of a sheet of paper. Consequently, the two sides can exhibit different properties. For example, the two sides of a sheet of paper are generally termed the top side (or felt side) and the bottom side (or wire side). Two-sidedness is the property of certain dyes to color more heavily the shorter paper fibers and fillers. The following method was used to determine two-sidedness for the dyes of Examples 1 and 2.

Five-gram pulp mixtures containing dyes were diluted to one liter and divided into equal portions. One portion was diluted to one liter and pulled under vacuum through a round mold fitted with a 100/120 mesh screen. This sheet was removed from the mold and labeled the wire side. The second portion was also diluted to one liter and pulled under vacuum through a round mold. The filtrate obtained from both filtrations was then poured carefully through the second sheet so as not to form a hole in the sheet. The second sheet was removed from the mold and labeled the felt side. The two sheets were then dried at about 93°C on an electric drum dryer and compared for relative color strength. A dye was considered wire- or bottom-sided if the first sheet was more heavily colored and felt- or top-sided if the second sheet was more heavily colored (see tables).

### Examples 3-4 "Neutral dyeings"

Pulp mixtures were prepared by stirring 3 g (dry weight) of bleached, softwood kraft pulp in 100 ml of water artificially hardened to 200 ppm with calcium chloride. To the pulp slurry was added 1.0% (based on the dry weight of fiber) of an appropriate standard dye or an equivalent amount (as determined by the transmission spectral method described above) of a test dye (as well as any second standard dye). The dyed pulp mixture was stirred for twenty minutes, then further diluted with 100 ml of artificially hardened water and poured into a TAPPI sheet mold half filled with deionized water. A paper sheet was formed as the water was drained from the mold through the forming screen located at the bottom of the TAPPI mold. The resultant sheet was pressed between blotters, placed on a chrome backing plate, and placed in a drying ring for drying in an oven at approximately 90°C. The dried sheets were then compared for color strength and shade difference. Test results for Example 3 (based on the dye of Example 1) are summarized in Table 1 and test results for Example 4 (based on the dye of Example 2) are summarized in Table 2.

**Table 1**

| Test results for Example 3 (neutral dyeings based on Example 1) | | |
|---|---|---|
| | Results | |
| Dye solution | Standard A | Example 1 |
| Dye amount (%) | 1.0 | 0.58 |

| Visual | | |
|---|---|---|
| Strength (parts) | 100 | 100 |
| Shade | -- | much yellow |

| Reflectance | | |
|---|---|---|
| Strength (parts) | 100 | 100 |

| Shade (CIE) | | |
|---|---|---|
| L* | 67.6 | 68.9 |
| a* | 43.8 | 43.6 |
| b* | 12.2 | 14.1 |
| C* | 45.5 | 45.8 |

| Bleedfastness | | |
|---|---|---|
| Water | 4-5 | 4 |
| Milk | 3-4 | 4 |
| 1:1 Water/alcohol | 3 | 2 |
| Soap | 4-5 | 4 |
| Vinegar | 5 | 4 |

**Table 2**

| Test results Example 4 (neutral dyeings based on Example 2) | | | |
|---|---|---|---|
| | Results | | |
| Dye solution | Standard B | Standard C | Example 2 |
| Dye amount (%) | 1.0 | 3.0 | 5.0 |

| Visual | | | |
|---|---|---|---|
| Strength (parts) | 100 | 100 | 100 |
| Shade | -- | much red cons. brt. | cons. red sl. dull |

| Reflectance | | | |
|---|---|---|---|
| Strength (parts) | 100 | 110.6 | 102.4 |

| Shade (CIE) | | | |
|---|---|---|---|
| L* | 56.9 | 64.9 | 59.2 |
| a* | 38.1 | 47.9 | 41.4 |
| b* | -15.0 | -0.7 | -0.1 |
| C* | 41.0 | 47.9 | 41.4 |

| Bleachability (% color remaining) | | | |
|---|---|---|---|
| Sodium hypochlorite | 13.7 | 1.3 | 14.2 |
| Sodium hydrosulfite | 6.4 | 3.2 | 52.3 |
| FAS | 32.6 | 7.4 | 70.9 |

| Bleedfastness | | | |
|---|---|---|---|
| Water | 2 | 2 | 3-4 |
| Milk | 2 | 3 | 3 |
| 1:1 Water/alcohol | 1 | 1 | 1 |
| Soap | 2 | 3 | 3 |
| Vinegar | 2 | 2 | 3-4 |

### Examples 5-6 "Acid dyeings"

Pulp mixtures were prepared by stirring 3 g (dry weight) of bleached, softwood kraft pulp in 100 ml of water artificially hardened to 200 ppm with calcium chloride. To the pulp slurry was added 1.0% (based on the dry weight of fiber) of an appropriate standard dye or an equivalent amount (as determined by the transmission spectral method described above) of a test dye (as well as any second standard dye). The dyed pulp mixture was stirred for two minutes, after which was added 4.0 ml of a 0.88% solution of Pexol® rosin size solution. After the slurry was stirred for an additional five minutes, 10.0 ml of a 1.5% aluminum sulfate solution was added to the slurry. The dyed pulp mixture was stirred for twenty minutes, then further diluted with 100 ml of artificially hardened water and poured into a TAPPI sheet mold half filled with deionized water. A paper sheet was formed as the water was drained from the mold through the forming screen located at the bottom of the TAPPI mold. The resultant sheet was pressed between blotters, placed on a chrome backing plate, and placed in a drying ring for drying in an oven at approximately 90°C. The dried sheets are then compared for color strength and shade difference. Test results for Example 5 (based on the dye of Example 1) are summarized in Table 3 and test results for Example 6 (based on the dye of Example 2) are summarized in Table 4.

**Table 3**

| Test results for Example 5 (acid dyeings based on Example 1) | | |
|---|---|---|
| | Results | |
| Dye solution | Standard A | Example 1 |
| Dye amount (%) | 1.0 | 0.57 |

| Visual | | |
|---|---|---|
| Strength (parts) | 100 | 100 |
| Shade | -- | much yellow |

| Reflectance | | |
|---|---|---|
| Strength (parts) | 100 | 100 |

| Shade (CIE) | | |
|---|---|---|
| L* | 66.8 | 68.2 |
| a* | 43.0 | 42.7 |
| b* | 12.8 | 14.1 |
| C* | 44.9 | 45.0 |

| Bleachability (% color remaining) | | |
|---|---|---|
| Sodium hypochlorite | 4.8 | 10.3 |
| Sodium hydrosulfite | 27.0 | 41.4 |
| FAS | 76.0 | 70.2 |
| | | |
| Lightfastness | 2 hrs, on-shade break | 2 hrs, off-shade break |
| | | |
| Sidedness | slight top | slight top |

**Table 4**

| Test results for Example 6 (acid dyeings based on Example 2) | | | |
|---|---|---|---|
| | Results | | |
| Dye solution | Standard B | Standard C | Example 2 |
| Dye amount (%) | 1.0 | 3.0 | 5.0 |

| Visual | | | |
|---|---|---|---|
| Strength (parts) | 100 | 110 | 110 |
| Shade | -- | much red cons. brt. | cons. red sl. dull |

| Reflectance | | | |
|---|---|---|---|
| Strength (parts) | 100 | 111.5 | 120.5 |

| Shade (CIE) | | | |
|---|---|---|---|
| L* | 56.5 | 64.1 | 60.4 |
| a* | 35.6 | 46.7 | 38.1 |
| b* | -14.2 | -2.1 | 2.0 |
| C* | 38.3 | 46.7 | 38.2 |

| Bleachability (% color remaining) | | | |
|---|---|---|---|
| Sodium hypochlorite | 12.0 | 1.0 | 10.0 |
| Sodium hydrosulfite | 10.4 | 4.6 | 57.0 |
| FAS | 34.0 | 24.7 | 76.5 |
| | | | |
| Lightfastness | 4 hrs, on-shade break | 4 hrs, on-shade break | 2 hrs, off-shade break |
| | | | |
| Sidedness | bottom | top | even |

### Example 7 "Alkaline dyeing"

Pulp mixtures were prepared by stirring 3 g (dry weight) of bleached, softwood kraft pulp in 100 ml of water artificially hardened to 200 ppm with calcium chloride. A 3% calcium carbonate suspension (10 ml) was added to the pulp mixture, which was then allowed to mix for five minutes. To this pulp slurry was added 1.0% (based on the dry weight of fiber) of an appropriate standard dye or an equivalent amount (as determined by the transmission spectral method described above) of a test dye (as well as any second standard dye). The dyed pulp slurry was stirred for fifteen minutes, after which 2 ml of a 0.3% solution of alkyl ketene dimer sizing agent (available as HERCON 70 from Hercules) were added to the pulp mixture. After the mixture stirred for an additional five minutes, the slurry was further diluted with 100 ml of hardened water, stirred for an additional two minutes, and poured into a TAPPI sheet mold half filled with deionized water. A paper sheet was formed as the water was drained from the mold through the forming screen located at the bottom of the TAPPI mold. The resultant sheet was pressed between blotters, placed on a chrome backing plate, and placed in a drying ring for drying in an oven at approximately 90°C. The dried sheets were then compared for color strength and shade difference. Test results for Example 7 (based on the dye of Example 2) are summarized in Table 5.

**Table 5**

| Test results for Example 7 (alkaline dyeings based on Example 2) | | | |
|---|---|---|---|
| | Results | | |
| Dye solution | Standard B | Standard C | Example 2 |
| Dye amount (%) | 1.0 | 3.0 | 5.0 |

| Visual | | | |
|---|---|---|---|
| Strength (parts) | 100 | 100 | 110 |
| Shade | -- | much red cons. brt. | cons. red |

| Reflectance | | | |
|---|---|---|---|
| Strength (parts) | 100 | 100.6 | 118.6 |

| Shade (CIE) | | | |
|---|---|---|---|
| L* | 60.2 | 66.9 | 64.1 |
| a* | 36.3 | 47.0 | 47.0 |
| b* | -14.4 | -2.1 | -0.1 |
| C* | 39.0 | 47.1 | 38.2 |

| Bleachability (% color remaining) | | | |
|---|---|---|---|
| Sodium hypochlorite | 30.7 | 3.9 | 2.5 |
| Sodium hydrosulfite | 11.6 | 2.9 | 60.2 |
| FAS | 20.0 | 4.6 | 80.0 |

### Example 8 Dyeings with a fixing agent

Pulp mixtures were prepared by stirring 3 g (dry weight) of bleached, softwood kraft pulp in 100 ml of water artificially hardened to 200 ppm with calcium chloride. A 0.6% solution (5 ml) of LEVOGEN PM fixing agent (available from Miles Inc.) was added to the slurry, which was then mixed for two minutes. To the pulp slurry was added 1.0% (based on the dry weight of fiber) of an appropriate standard dye or an equivalent amount (as determined by the transmission spectral method described above) of a test dye (as well as any second standard dye). After the dyed pulp slurry was stirred for twenty minutes, the slurry was further diluted with 100 ml of hardened water and poured into a TAPPI sheet mold half filled with deionized water. A paper sheet was formed as the water was drained from the mold through the forming screen located at the bottom of the TAPPI mold. The resultant sheet was pressed between blotters, placed on a chrome backing plate, and placed in a drying ring for drying in an oven at approximately 90°C. The dried sheets were then compared for color strength and shade difference. The test results for Example 8 (based on the dye of Example 1) are summarized in Table 6.

**Table 6**

| Test results for Example 8 (dyeings based on Example 1 in the presence of LEVOGEN PM fixing agent) | | |
|---|---|---|
| | Results | |
| Dye solution | Standard A | Example 1 |
| Dye amount (%) | 1.0 | 0.57 |

| Reflectance | | |
|---|---|---|
| Strength (parts) | 210 | 58 |

| Shade (CIE) | | |
|---|---|---|
| L* | 71.9 | 68.0 |
| a* | 31.5 | 39.9 |
| b* | 9.6 | 12.7 |
| C* | 32.9 | 41.9 |

In general, when compared to Standard A, the dye solution of Example 1 had twice the coloristic strength and provided dyeings that were much yellower in shade, exhibited about the same bleedfastness when dyed under neutral conditions, and had similar hypochlorite bleachability when bleached after dyeing under acid conditions. However, the acid dyeing using the dyestuff of Example 1 exhibited somewhat poorer lightfastness due to an "off-shade break" result as compared to an "on-shade break" when using Standard A.

The strength of the dye solution of Example 2 was about 20% that of the dye solution of Standard B. Acid and neutral dyeings using the dyestuff of Example 2 were considerably red and slightly dull in comparison to the corresponding dyeings of Standard B. Acid dyeings using the dyestuff of Example 2 exhibited lower lightfastness than acid dyeings of Standard B, were about equivalent in hypochlorite bleachability, and were evensided as compared to topsided results for Standard B. Neutral dyeings using the dyestuff of Example 2 exhibited slightly better bleedfastness when compared to neutral dyeings using Standard B. Alkaline dyeings using the dyestuff of Example 2 were considerably red in comparison to corresponding dyeings of Standard B and exhibited significantly higher bleachability in hypochlorite but significantly lower bleachability in sodium hydrosulfite in comparison to Standard B.

## Claims

1. An azo compound having the formula 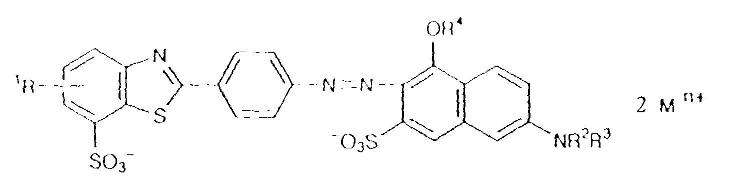 wherein
R¹ is C₁-C₆ alkyl, C₅-C₈ cycloalkyl, halogen, or nitro;
R² and R³ are independently hydrogen, C₁-C₆ alkyl, C₅-C₈ cycloalkyl or C₆-C₁₀ aryl which is unsubstituted or substituted with alkyl, alkoxy, halogen, cyano, nitro ; or are C₇-C₁₆ aralkyl in which the aromatic ring carbon atoms are unsubstituted or substituted with alkyl, alkoxy, halogen, cyano, nitro ;
or are C₂-C₆ alkanoyl, (C₅-C₈ cycloalkane)carbonyl, or are C₇-C₁₁ aroyl in which the aromatic ring carbon atoms are unsubstituted or substituted with alkyl, alkoxy, halogen, cyano, nitro ;
R⁴ is hydrogen, C₁-C₆ alkyl, or C₂-C₆ alkanoyl; and
Mⁿ⁺ is
(a) R^{a}R^{b}R^{c}R^{d}N⁺; wherein R^{a}, R^{b}, R^{c}, and R^{d} are independently hydrogen, C₁-C₆ alkyl, or C₂-C₆ hydroxyalkyl,
(b) 1/n moles of an n-valent metal ion per mole of the azo compound, the n-valent metal ion being an ionized metal or a metal within a complex having a positive charge n ; or
(c) H⁺.

2. An azo compound according to Claim 1 wherein R¹ is C₁-C₆ alkyl, R² is hydrogen, R³ is hydrogen or C₆-C₁₀ aryl, R⁴ is hydrogen, and Mⁿ⁺ is as defined above.

3. An azo compound according to Claim 1 wherein R¹ is methyl.

4. An azo compound according to Claim 1 wherein R¹ is methyl substituted at the 6-position of the benzothiazole.

5. An azo compound according to Claim 1 wherein R³ is hydrogen or phenyl.

6. An azo compound according to Claim 1 wherein Mⁿ⁺ is a protonated tertiary amine R^{a}R^{b}R^{c}R^{d}N⁺ in which one of R^{a}, R^{b}, R^{c}, and R^{d} is hydrogen and the others of R^{a}, R^{b}, R^{c}, and R^{d} are independently C₁-C₆ alkyl or C₂-C₆ hydroxyalkyl.

7. An azo compound according to Claim 1 wherein Mⁿ⁺ is (HOCH₂CH₂)₃NH⁺.

8. An azo compound according to Claim 1 having the formula

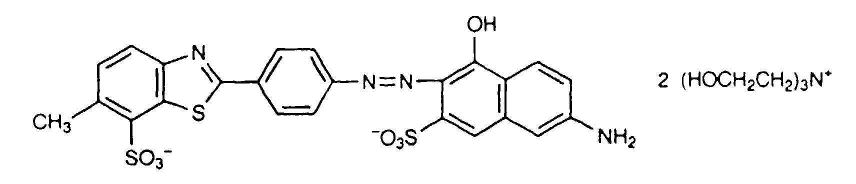

9. An azo compound according to Claim 1 having the formula

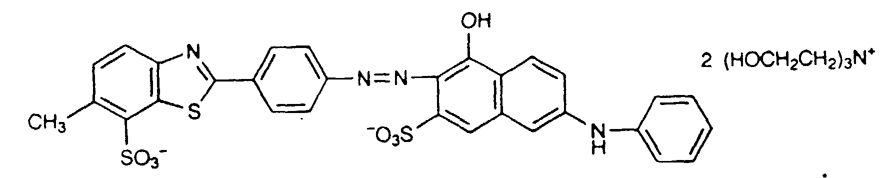

10. An aqueous dye solution comprising 8 to 29% by weight of a dyestuff according to Claim 1.

## Patentansprüche

1. Azoverbindung mit der Formel 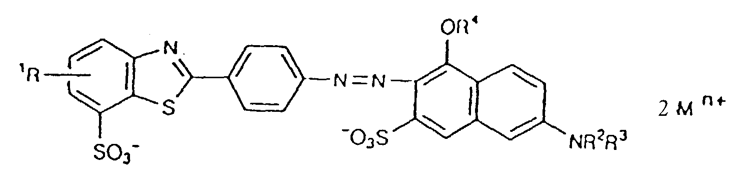 wobei
R¹ C₁-C₆-Alkyl, C₅-C₈-Cycloalkyl, Halogen oder Nitro ist,
R² und R³ unabhängig Wasserstoff, C₁-C₆-Alkyl, C₅-C₈-Cycloalkyl oder C₆-C₁₀-Aryl, das unsubstituiert oder mit Alkyl, Alkoxy, Halogen, Cyan oder Nitro substituiert ist, oder C₇-C₁₆-Aralkyl, bei dem die aromatischen Ringkohlenstoffatome unsubstituiert oder mit Alkyl, Alkoxy, Halogen, Cyan oder Nitro substituiert sind, oder C₂-C₆-Alkanoyl, (C₅-C₈-Cycloalkan)carbonyl oder C₇-C₁₁-Aroyl, bei dem die aromatischen Ringkohlenstoffatome unsubstituiert oder mit Alkyl, Alkoxy, Halogen, Cyan oder Nitro substituiert sind, sind,
R⁴ Wasserstoff, C₁-C₆-Alkyl oder C₂-C₆-Alkanoyl ist und
Mⁿ⁺
(a) R^{a}R^{b}R^{c}R^{d}N⁺, wobei R^{a}, R^{b}, R^{c} und R^{d} unabhängig Wasserstoff, C₁-C₆-Alkyl oder C₂-C₆-Hydroxyalkyl sind,
(b) 1/n mol eines n-wertigen Metallions pro Mol der Azoverbindung, wobei das n-wertige Metallion ein ionisiertes Metall oder ein Metall innerhalb eines Komplexes mit einer positiven Ladung n ist, oder
(c) H⁺ ist.

2. Azoverbindung gemäß Anspruch 1, wobei R¹ C₁-C₆-Alkyl ist, R² Wasserstoff ist, R³ Wasserstoff oder C₆-C₁₀-Aryl ist, R⁴ Wasserstoff ist und Mⁿ⁺ wie in Anspruch 1 definiert ist.

3. Azoverbindung gemäß Anspruch 1, wobei R¹ Methyl ist.

4. Azoverbindung gemäß Anspruch 1, wobei R¹ Methyl als Substituent auf Position 6 des Benzothiazols ist.

5. Azoverbindung gemäß Anspruch 1, wobei R³ Wasserstoff oder Phenyl ist.

6. Azoverbindung gemäß Anspruch 1, wobei Mⁿ⁺ ein protoniertes tertiäres Amin R^{a}R^{b}R^{c}R^{d}N⁺ ist, wobei einer der Reste R^{a}, R^{b}, R^{c} und R^{d} Wasserstoff ist und die anderen unabhängig C₁-C₆-Alkyl oder C₂-C₆-Hydroxyalkyl sind.

7. Azoverbindung gemäß Anspruch 1, wobei es sich bei Mⁿ⁺ um (HOCH₂CH₂)₃NH⁺ handelt.

8. Azoverbindung gemäß Anspruch 1 mit der Formel

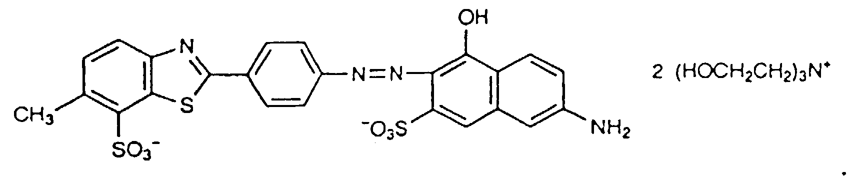

9. Azoverbindung gemäß Anspruch 1 mit der Formel

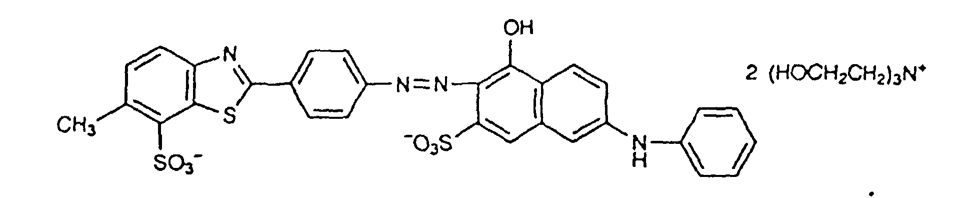

10. Wäßrige Farbstofflösung, die 8 bis 29 Gew.-% eines Farbstoffs gemäß Anspruch 1 umfaßt.

## Revendications

1. Composé azoïque ayant la formule 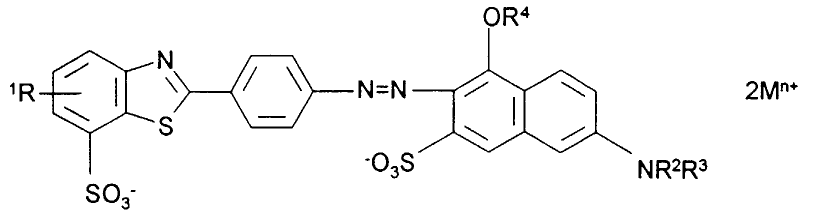 où
R¹ est alkyle en C₁-C₆, cycloalkyle en C₅-C₈, halogène ou nitro,
R² et R³ sont indépendamment hydrogène, alkyle en C₁-C₆, cycloalkyle en C₅-C₈ ou aryle en C₆-C₁₀, qui est non substitué ou substitué par alkyle, alcoxy, halogène, cyano, nitro ;
ou sont aralkyle en C₇-C₁₆ où les atomes de carbone du cycle aromatique sont non substitués ou substitués par alkyle, alcoxy, halogène, cyano, nitro ;
ou sont alcanoyle en C₂-C₆, (cycloalcane en C₅-C₈)-carbonyle ou sont aroyle en C₇-C₁₁ où les atomes de carbone du cycle aromatique sont non substitués ou substitués par alkyle, alcoxy, halogène, cyano, nitro ;
R⁴ est hydrogène, alkyle en C₁-C₆ ou alcanoyle en C₂-C₆; et
Mⁿ⁺ est
(a) R^{a}R^{b}R^{c}R^{d}N⁺, où R^{a}, R^{b}, R^{c} et R^{d} sont indépendamment hydrogène, alkyle en C₁-C₆ ou hydroxyalkyle en C₂-C₆,
(b) 1/n moles d'un ion métallique n-valent par mole de composé azoïque, l'ion métallique n-valent étant un métal ionisé ou un métal dans un complexe ayant une charge positive n, où
(c) H⁺.

2. Composé azoïque selon la revendication 1, où R¹ est alkyle en C₁-C₆, R² est hydrogène, R³ est hydrogène ou aryle en C₆-C₁₀, R⁴ est hydrogène et Mⁿ⁺ est comme défini ci-dessus.

3. Composé azoïque selon la revendication 1, où R¹ est méthyle.

4. Composé azoïque selon la revendication 1, où R¹ est méthyle substitué en position 6 du benzothiazole.

5. Composé azoïque selon la revendication 1, où R³ est hydrogène ou phényle.

6. Composé azoïque selon la revendication 1, où Mⁿ⁺ est une amine tertiaire protonée R^{a}R^{b}R^{c}R^{d}N⁺ où l'un parmi R^{a}, R^{b}, R^{c} et R^{d} est hydrogène et les autres parmi R^{a}R^{b}R^{c} et R^{d} sont indépendamment alkyle en C₁-C₆ ou hydroxyalkyle en C₂-C_{6.}

7. Composé azoïque selon la revendication 1 ou Mⁿ⁺ est (HOCH₂CH₂)₃NH⁺.

8. Composé azoïque selon la revendication 1 ayant la formule

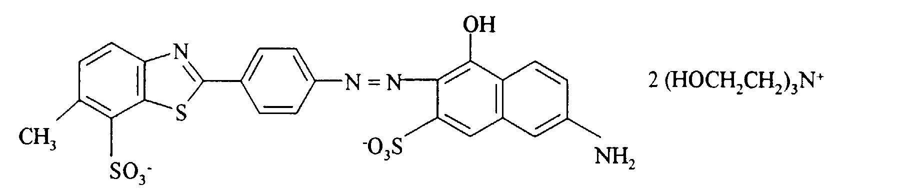

9. Composé azoïque selon la revendication 1 ayant la formule

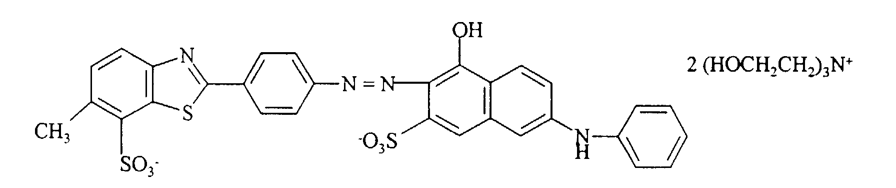

10. Solution aqueuse de colorant comprenant 8 à 29 % en masse d'un colorant selon la revendication 1.
